(19) Europäisches Patentamt
European Patent Office
Office européen des brevets

(11) Publication number: **0 217 435 A2**

# (12) EUROPEAN PATENT APPLICATION

(21) Application number: 86201486.7

(51) Int. Cl.⁴: C04B 26/02

(22) Date of filing: 28.08.86

(30) Priority: 30.09.85 US 782748
30.09.85 US 782747

(43) Date of publication of application:
08.04.87 Bulletin 87/15

(84) Designated Contracting States:
BE DE FR GB IT NL

(71) Applicant: SHELL INTERNATIONALE RESEARCH MAATSCHAPPIJ B.V.
Carel van Bylandtlaan 30
NL-2596 HR Den Haag(NL)

(72) Inventor: Halper, Walter Marvin
6215 Hummingbird
Houston Texas 77069(US)
Inventor: Willis, Carl Lesley
15922 Red Willow
Houston Texas 77084(US)

(74) Representative: Aalbers, Onno et al
P.O. Box 302
NL-2501 CH The Hague(NL)

## (54) Polymer concrete compositions and process for the preparation thereof.

(57) Room temperature atmospheric pressure polymer concrete mouldable composition comprising a thermosetting resin, vinyl monomer, catalyst, filler and a styrene-diene block copolymer and a process for the manufacture of the composition by mixing the components, moulding the mixture and allowing the moulded mixture to cure.

EP 0 217 435 A2

# POLYMER CONCRETE COMPOSITIONS AND PROCESS FOR THE PREPARATION THEREOF

The invention relates to a mouldable polymer concrete composition and to a process for the preparation thereof. More particularly, the invention relates to a moulding compound comprising a thermosetting resin, vinyl monomer, catalyst, filler and a particular rubber component.

The use of polymeric materials in concrete formulations is well known. One common composite material is called polymer-impregnated concrete wherein hardened portland cement concrete is impregnated with a liquid monomeric material which is subsequently polymerized in situ. These materials have remarkable durability and resistance against salts which make their use especially attractive for concrete pipe, desalting plants, tunnel support linings and bridge decks. Another system is a polymer-portland cement concrete which is produced by adding a monomeric or polymeric material to a fresh portland cement concrete mixture which is subsequently cured and polymerized after placement. It will be appreciated that both the above systems are hydraulic systems, i.e., they require the use of water to cure the portland cement. Accordingly, another system has more recently been discovered which is called polymer concrete which contains little or no cement and no water. This is a composite formed by polymerizing a monomeric material with an aggregate, for example gravel or sand.

The resins most often employed in present polymer concrete compositions are the so-called acrylate resins, especially polymers of methyl methacrylate. These acrylate resins are relatively inexpensive; however, they suffer a multitude of serious shortcomings. For example, they exhibit high volatility, high toxicity, high flammmability, and are explosive. More importantly, they exhibit high shrinkage which severely limits their useful life in some applications.

A number of these serious environmental shortcomings such as toxicity and volatility were eliminated by the replacement of the methacrylate resins with polyester resins in combination with an aggregate.

Compositions have been discovered which exhibit increased and improved physical and chemical properties, especially reduced shrinkage after cure which incorporate polyesters and fillers containing fly ash. These compositions had problems with shrinkage and surface appearance.

Unsaturated polyester resins, that is copolymerizable mixtures of (1) a polyester of an alpha,beta-ethylenically unsaturated dicarboxylic acid, optionally a saturated dicarboxylic acid, and a dihydric alcohol, and (2) an ethylenically unsaturated monomer capable of cross-linking the polyester molecules at the points of unsaturation, are extensively utilized commercially as sheet moulding resins. These resins can be utilized in the production of a wide variety of shaped articles such as boats, automobile bodies, heater housings, containers of various types, toys, awnings, business machine bodies and electrical housings. One particular advantage obtained by the use of unsaturated polyester resins in moulding operations is that little and sometimes no pressure need be used. Low pressure moulding is possible because no condensation by-products that must be removed are formed during the curing of such resins.

The production and use of sheet moulding compounds (SMC) is well known. Various formulations are described in U.S. patent specifications 3,231,634; 3,674,893; 3,773,709; 3,857,812; 3,882,078; 3,989,769; 3,992,479; 3,998,909; 4,020,036; 4,096,107; 4,145,381 and 4,400,478. A typical SMC formulation contains an unsaturated polyester resin, styrene monomer, rubber, peroxide catalyst, surface agent (e.g. zinc stearate), filler (e.g. calcium carbonate), thickening agent (e.g. magnesium oxide), glass fibre and pigments.

The composition disclosed in the sheet moulding compound prior art contain a thickening agent, e.g., $Mg(OH)_2$ or MgO and a rubber component to enhance physical properties and reduce shrinkage.

These SMC compounds are designed so that thickening takes place very slowly, e.g., several days, and so that they may be moulded 7 to 14 days after mixing. SMC materials are compression moulded and always use high pressures up to 138 bar to fill the mould and during curing.

In the past other thermoplastic polymer modifiers used in the systems phase separated when exposed to the high temperature high pressure curing conditions. Shrink control was attributed to this phase separation in these systems.

Moulding or curing temperatures range between 100 °C and 200 °C. A polymer concrete composition has now been formed which can be mixed, moulded and cured at atmospheric pressure and ambient temperature in less than 1 to 2 hours and which has good mechanical and physical properties, good surface appearance and little or no shrinkage.

Accordingly, the present invention provides a mouldable polymer concrete composition which comprises the following components:-

a) an unsaturated, crosslinkable thermosetting resin;

b) an ethylenically unsaturated monomer;

c) as additive a reinforcing agent and/or a filler;

d) a low temperature free radical initiator;

e) a low temperature promoter; and

f) a styrene-diene block copolymer.

These compositions are especially suitable for use in the manufacture of a wide variety of articles, especially articles of construction such as pipes, pipe linings, bridge decks, dam spillways, building panels, tank linings and armor platine. Articles of construction prepared from these novel compositions exhibit lower cost, excellent chemical resistance and physical properties, such as high strength and relatively low shrinkage. Some systems may even exhibit expansion.

A key aspect of the present invention is the styrene-diene block copolymer of component f. This block copolymer is preferably a styrene-butadiene block copolymer. An aspect of this polymer is the microstructure of the butadiene portion. This microstructure, as determined by an infra-red (IR) method of analysis, is as follows (expressed in mol per cent):

| | Preferred | More preferred |
|---|---|---|
| 1,2-vinyl | 10 to 90 | 35 to 70 |
| 1,4-cis | 5 to 40 | 15 to 25 |
| 1,4-trans | 5 to 50 | 15 to 40 |

The desired weight average molecular weights of the styrene portion and butadiene portion of each block copolymer are:

| | Preferred | More preferred |
|---|---|---|
| Styrene block | 1,000 to 100,000 | 8,000 to 20,000<br>particularly;<br>11,000 to 15,000 |
| Butadiene block | 30,000 to 100,000 | 60,000 to 80,000 |

The block copolymer may be a tapered styrene/butadiene block copolymer.

The styrene-diene block copolymer is typically prepared by anionic polymerization employing an organomonolithium initiator. The first step of the process involves contacting the styrene monomer and the organomonolithium compound (initiator) in the presence of an inert diluent therein forming a living polymer compound having the simplified structure S-Li. The inert diluent may be an aromatic or naphthenic hydrocarbon, e.g., benzene or cyclohexane, which may be modified by the presence of an alkene or alkane such as pentenes or pentanes. Specific examples of suitable diluents include n-pentane, n-hexane, 2,2,4-trimethylpentane, cyclohexane, toluene, benzene and the three xylenes. The organomonolithium compounds - (initiators) that are reacted with the styrene monomer are represented by the formula RLi; wherein R is an aliphatic, cycloaliphatic, or aromatic radical, or combinations thereof, preferably containing from 2 to 20 carbon atoms. Exemplary of these organomonolithium compounds are ethyllithium, n-propyllithium, isopropyllithium, n-butyllithium, sec-butyllithium, tert-octyllithium, n-decyllithium, n-eicosyllithium, phenyllithium, 2-naphthyllithium, 4-butylphenyllithium, 4-tolyllithium, 4-phenylbutyllithium, cyclohexyllithium, 3,5-di-n-heptylcyclohexyllithium and 4-cyclopentylbutyllithium. The alkyllithium compounds are preferred for employment according to this invention, especially those wherein the alkyl group contains from 3 to 10 carbon atoms. A much preferred initiator is sec-butyllithium as described in U.S. patent specification No. 3,231,635. The concentration of the initiator can be regulated to control molecular weight. Generally, the initiator concentration is in the range of about 0.25 to 50 mmol per 100 g of monomer although both higher and lower initiator levels can be used if desired. The required initiator level frequently depends upon the solubility of the initiator in the hydrocarbon diluent. These polymerization reactions are usually carried out at a temperature in the range of -51 °C to +149 °C and at pressures which are sufficient to maintain the reaction mixture in the liquid phase.

Next, the living polymer in solution is contacted with a diene monomer. The resulting living polymer has a simplified structure styrene-diene-lithium, or P-Li as used to define the polymer composition.

The medium vinyl-polybutadiene block is readily obtained by employing a small amount of a polar material as a vinyl promoter. The vinyl promoter conveniently is added to the hydrocarbon diluent at the appropriate time in the polymerization sequence. These promoters can be selected from ethers, tertiary amines, and other promoters. Exemplary species include the presently preferred dimethoxybenzene, as well as tetrahydrofuran, 1,2-dimethoxyethane, dimethyl ether, diethyl ether, methyl ethyl ether, ethyl propyl ether, di-n-propyl ether, di-n-octyl ether, anisole, dibenzyl ether, diphenyl ether, dimethylethylamine, tri-n-propylamine, tri-n-butylamine, trimethylamine, triethylamine, N,N-dimethylaniline, N-ethylpiperidine, N-methyl-N-ethylaniline, N-methyl-morpholine and N,N,N',N'-tetramethylethylenediamine. The amount of polar compound employed will vary widely with the choice of vinyl promoter, but should be that amount necessary to promote the degree of vinylization desired. An exemplary amount would be in the range of about 0.01 to 25 parts by weight per hundred parts monomer. See generally U.S patent specification 4,308,358.

The microstructure of the polybutadiene block of the AB block copolymer may be determined by conventional infra-red analysis, using the 910 $cm^{-1}$ band. The average molecular weights of the polystyrene blocks of the block copolymer are determined by gel permeation chromatography, whereas the polystyrene content of the polymer is measured by infra-red spectroscopy of the finished polymer.

The living polymer may be coupled with a variety of coupling agents e.g. $CO_2$ which are well known in the art.

Next the polymer is recovered by known finishing techniques.

If desired, the diene block in the block copolymer may be partially or completely hydrogenated.

The unsaturated, crosslinkable thermosetting resin of component (a) is preferably an unsaturated vinyl ester resin, unsaturated polyester resin, an acetylene-terminated polyamide, a polyimide or a polyamide-imide. The vinyl ester resins are typically prepared by esterification of polyepoxides with ethylenically unsaturated monocarboxylic acids in the presence of onium salts of inorganic acids, such as disclosed in U.S patent specification No. 3,377,406. The vinyl ester resins have a typical formula:

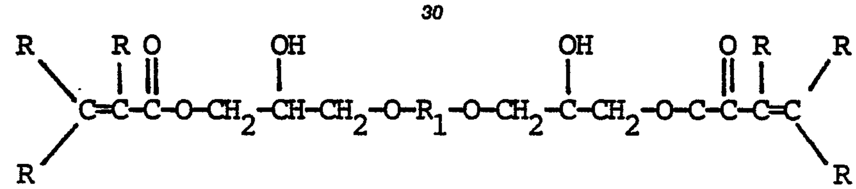

and are prepared by reacting a glycidyl polyether of a polyhydric phenol with an acrylic acid in the presence of an onium salt.

The composition of the polymerizable unsaturated polyester resin component of the moulding compositions of this invention may be varied widely. The polymerizable unsaturated polyester portion thereof is ordinarily prepared by the reaction of an unsaturated dicarboxylic acid and a polyol, particularly an alpha, beta-ethylenically unsaturated dicarboxylic acid, or an admixture of such an acid with a saturated dicarboxylic acid, and a dihydric alcohol. Among the ethylenically unsaturated dicarboxylic acids which may be used are maleic acid, fumaric acid, mesaconic acid, aconitic acid, citraconic acid, ethyl maleic acid, xeronic acid and itaconic acid. Halogen substituted derivatives of these acids may also be utilized. The anhydrides of these acids, where the anhydrides exist, are, of course, embraced under the term "acid" since the reaction products or polyesters obtained by utilizing such acids and anhydrides are the same, and, in fact, in many instances it is preferred to utilize the anhydride rather than the free acid.

The dihydric alcohol component of the polyester includes such compounds as ethylene glycol, diethylene glycol, triethylene glycol, polyethylene glycol, 1,3-propanediol, 1,2-propanediol, di-1,3-propanediol, butylene glycol and halogen substituted glycols. Small amounts of polyols with a functionality greater than two may be utilized in conjunction with the dihydric component.

As indicated hereinbefore, in many instances it is desirable to utilize a portion of a saturated dicarboxylic acid in conjunction with the ethylenically unsaturated dicarboxylic acid component. Examples of useful saturated acids include phthalic acid, isophthalic acid, terephthalic acid, succinic acid, adipic acid, suberic acid, azelaic acid, sebacic acid, dimethyl succinic acid, as well as halogenated derivatives of such acids.

The inclusion of a saturated dicarboxylic acid, such as described hereinbefore, in an unsaturated polyester resin does not alter the beneficial effects realized from the addition of a small quantity of the carboxy-containing polymer. Generally, a saturated dicarboxylic acid is included as one of the components utilized in the preparation of an unsaturated polyester resin as some physical properties are improved by such inclusion. The term "unsaturated polyester resin" as used in the resin industry is interpreted as a resin utilizing an unsaturated dicarboxylic acid as at least a portion of the acid component of the polyester; therefore, the term embraces those resins which also utilize a saturated dicarboxylic acid as a portion of the acid component.

The cross-linkable polyester resins and vinyl ester resins obtained by the various procedures set forth in the patent specification listed hereinbefore can be readily cross-linked by uniting them with ethylenically unsaturated monomers of component (b), i.e., monomeric compounds containing a $CH_2=C<$ group. Styrene and vinyl-toluene are most frequently utilized as the cross-linking monomer, although many other monomers may also be employed. Styrene is the most preferred monomer. Such other monomers include divinylbenzene, ethyl-alpha-methylstyrene, chloro-and fluorostyrenes, diallyl phthalate, triallyl cyanurate, allyl diglycolate, diallyl phenyl phosphonate, diethylene glycol bis (allyl carbonate), 1,2-propylene glycol bis (allyl carbonate), bis (allyl lactate) carbonate, allyl succinate, allyl glycolate, allyl maleate, methallyl maleate, alkyl acrylates such as methyl acrylate, ethyl acrylate, propyl acrylate, butyl acrylate, vinyl acetate and allyl acetate. In addition to the foregoing monomeric compounds, which are merely representative, any

$H_2C=C<$

group containing monomer or mixtures of such monomers may be utilized if desired.

The low temperature free radical initiators of component (d) are conventional free radical polymerization initiators selected from among organic peroxides and the hydroperoxides such as benzoyl peroxide, dicumyl peroxide, methyl ethyl ketone peroxide, lauryl peroxide, cyclohexanone peroxide, t-butyl perbenzoate, t-butyl hydroperoxide, t-butylbenzene hydroperoxide, cumene hydroperoxide and t-butyl peroctoate. In addition, azo compounds such as azobis isobutyronitrile can be employed. Presently preferred catalysts are t-butyl perbenzoate and methyl ethyl ketone peroxide. The catalyst suitably functions in the 0 °C to 60 °C temperature range.

A low temperature catalyst should be used as a combination of a low temperature free radical initiator and a low temperature promoter such as a transition metal salt or metal complex such as cobalt naphthenate, so that the initiator will function at a temperature in the range of from 0 °C to 60 °C, for example at ambient temperature.

As noted hereinbefore, an essential component in the present composition is a reinforcing agent and/or a filler of component (c). The filler is preferably inorganic. Gravel or mixtures of sand and gravel are preferred.

In general, the sand or gravel in the present composition is derived from the crushing of, for example, rock. In other words, the sand or gravel has been obtained as a fractured product and exhibits an irregular and somewhat sharp feel. This sand or gravel is required in conventional hydraulic concretes and mortars to impart the necessary structural strength.

In general, the sand which is suitable in the present compositions is a relatively dense silica material having a particle size from about 2.54 cm to about 0.149 mm, with from about 4 mm to about 0.42 mm being preferred.

The filler may include fly ash, crushed stone, expanded mica and other silica and inorganic materials; expanded polymers; metal fibres, staples, bars and/or mesh; glass fibre or mats.

Also, for producing lightweight and insulating materials, up to about 25% of the filler, may be replaced with an insulating material such as expanded mica and the like.

Of course, other materials may be mixed or added, including, plasticizers, stabilizers, extenders, oils, resins, tars, asphalts, pigments, reinforcing agents, thixotropic agents, mould release agents and the like.

The compositions of the present invention are simply made by mixing the components together, placing the blend into a suitable mould or form and allowed to cure or harden. In general, the polymerization temperature will vary from 0 °C to 100 °C and more preferably from 10 °C to 60 °C or from 15 °C to 40 °C.

The relative amounts of each component are readily determined and adjusted by one skilled in the art. Relative amounts of various components are expressed below in per cent by weight:

| | Preferred Range, % | Typical Formulation, % |
|---|---|---|
| unsaturated thermo-setting resin | 2 to 30 | 10 |
| ethylenically unsaturated monomer | 2 to 30 | 10 |
| filler | 40 to 96<br>more preferably<br>60 to 90 | 75 |
| styrene-diene polymer | 0.1 to 30 | 5 |
| mould release agent | 0.1 to 2 | >1 |
| initiator | 0.01 to 1 | >1 |

The invention further provides a process for the manufacture of a mouldable polymer concrete composition as claimed in any one of the preceding claims which process comprises mixing:-

a) an unsaturated, crosslinkable thermosetting resin;

b) an ethylenically unsaturated monomer;

c) as additive a reinforcing agent and/or a filler;

d) a low temperature free radical initiator;

e) a low temperature promoter; and

f) a styrene-diene block copolymer, and moulding said mixture and allowing the moulded mixture to cure.

The invention is further illustrated by means of the following examples.

Examples 1-16 and Comparative Experiments A-E

| | | |
|---|---|---|
| Resin 1 | cyclopentadiene modified isophthalic acid polyester No. 32-779 | available from Reichold Chemical Company |
| Resin 2 | isophthalic acid polyester No. 92-888 | available from Reichold Chemical Company |
| Resin 3 | orthophthalic anhydride polyester No. 92-867 | available from Reichold Chemical Company |
| Resin 4 | vinyl ester No. 921 | available from Ashland Chemical Company |
| Resin 5 | propylene glycol maleic anhydride polyester No. 3702-5 | available from Koppers Chemical Company |

The polymer modifiers used are based on alkyl lithium-prepared styrene-butadiene (S-B), styrene isoprene (S-I) or styrene ethylene butylene (S-EB) block copolymers.

| Rubber | Type | Styrene MW | Rubber MW |
|---|---|---|---|
| 1 | S-B-S | 12,000 | 66,000 |
| 2 | S-B-S | 10,000 | 72,000 |
| 3 | S-I-S | 10,000 | 115,000 |
| 4 | S-EB-S | 7,000 | 40,000 |
| 5 | S-B | 30,000 | 132,000 |
| 6 | S-B | Tapered Diblock | - |
| 7 | S-B | Tapered Diblock | |

Molecular weights are determined by GPC.

The thermosetting resins were used as 60% solids solutions in styrene as obtained from the suppliers. The block copolymer polymer modifiers were used as 25% solids solutions in styrene.

The basic formulation for the polymer concrete samples was:

Resin/Rubber 60 parts

Fly Ash40 parts

Catalyst 2 parts based on the rubber-resin mixture

All of the resins were prepromoted with cobalt naphthenate at a level of 0.2 parts/100 resin. The formulation to make the test moulding was:

| | Weight | Parts Liquid | Parts Total |
|---|---|---|---|
| Resin | 400 g | 80 | 60 |
| Rubber Solution | 100 g | 20 | |
| Fly Ash | 333 g | — | 40 |
| Catalyst | 10 g | 2 based on liquids | |

The resin and rubber solutions were mixed together with a small paddle mixer. The catalyst was added to this blend. Then the fly ash was added and mixed until a smooth mixture was obtained. In approximately two to three minutes the mixture was poured into the moulds and left to cure at room temperature. The samples after curing were labelled and the compressive testing was done at least 24 hours later.

The catalyst used in the examples was Lupersol DDM-9, which is a trade name for methyl ethyl ketone peroxide available from Penwalt Corp. No. 129.

The compositions for the examples were run at 40% filler in order to amplify the effects of the rubber on the shrinkage. In typical applications, however, the filler concentration may be considerably higher.

Two 7.62 × 45.72 × 0.9525 cm and 7.62 × 45.72 × 1.27 cm panels were made for examining the shrinkage of the polymer concrete formulation. Said panels were cast on 0.0508 cm aluminium plate that was coated with an epoxy - (known under the trade name Atlas 828) to insure adhesion of the polymer concrete to the aluminium plate.

The shrinkage test used in this experiment is a relative test with no absolute values.

When a sample of polymer concrete is restrained on one side, e.g., by aluminium, the sample will warp if it shrinks as it cures.

The measurement of the shrinkage of the samples was done in the following manner.

The panel was set up on its edge. The first 5.08 cm of the 45.72 cm sample was matched to a straight line or "x" axis. The other end of the sample would either be:

a) in the first quadrant, indicating shrinkage, and given a plus value. More rubber could be added to this formulation.

b) on the "x" axis, indicating "zero" shrinkage and given a "zero" value.

c) in the second quadrant, indicating expansion, and given a negative value. This indicated there was too much rubber in this formulation.

The distance above or below the "x" axis measured in 0.08 cm for a 45.72 cm long sample is equal to the tangent of the angle of the triangle formed. The results are presented in the table hereinafter. The compressive strength was determined according to ASTM method C 109 morter cubes.

The controls with no rubber gave the shrinkage angle from which the shrinkage of the rubber blends was evaluated.

TABLE

| Comparative Experiment | A | | | | B | | | | C | | |
|---|---|---|---|---|---|---|---|---|---|---|---|
| Example | | 1 | 2 | 3 | | 4 | 5 | 6 | | 7 | 8 |
| Resin 1 | 100 | 78 | 80 | 88 | | | | | | | |
| Resin 2 | | | | | 100 | 88 | 92 | 96 | | | |
| Resin 3 | | | | | | | | | 100 | 88 | 92 |
| Resin 4 | | | | | | | | | | | |
| Resin 5 | | | | | | | | | | | |
| Rubber 1 | | 22 | | | | | | | | 12 | |
| 2 | | | | | | | | | | | 8 |
| 3 | | | | | | 12 | | | | | |
| 4 | | | | | | | | 4 | | | |
| 5 | | | 20 | | | | | | | | |
| 6 | | | | 12 | | | 5 | | | | |
| 7 | | | | | | | | | | | |
| Compressive strength, MPa | 53.8 | 35.2 | 36.5 | 44.1 | 57.2 | 49.0 | 52.4 | 57.2 | 55.2 | 42.7 | 38.6 |
| % retained comparative strength | | 66 | 68 | 82 | | 85 | 91 | 100 | | 78 | 70 |
| % shrinkage | | 0 | 18 | -26 | | 66 | 0 | 0 | | 15 | 0 |
| Shrink Angle | 10.6 | | | | 10.4 | | | | 10.2 | | |

TABLE CONTINUED

| Comparative Experiment | | | | D | | | | E | | |
|---|---|---|---|---|---|---|---|---|---|---|
| Example | 9 | 10 | 11 | | 12 | 13 | 14 | | 15 | 16 |
| Resin 1 | | | | | | | | | | |
| Resin 2 | | | | | | | | | | |
| Resin 3 | 88 | 90 | 92 | | | | | | | |
| Resin 4 | | | | 100 | 92 | 90 | 88 | | | |
| Resin 5 | | | | | | | | 100 | 92 | 92 |
| Rubber1 | | | | | | | | | | |
| 2 | | | | | 8 | | | | | |
| 3 | 12 | | | | | | | | | |
| 4 | | | | | | | | | | |
| 5 | | 10 | | | | 10 | | | | |
| 6 | | | 8 | | | | | | 8 | |
| 7 | | | | | | | 12 | | | 8 |
| Compressive strength, MPa | 50.3 | 42.7 | 42.7 | 44.8 | 68.3 | 51.0 | 53.1 | 67.6 | 22.8 | 42.1 |
| % retained comparative strength | 71 | 78 | 75 | | 115 | 86 | 89 | | 79 | 127 |
| % shrinkage | -16 | -21 | 19 | | 0 | 0 | 0 | | 62 | 36 |
| Shrink Angle | | | | 9.6 | | | | 8 | | |

## Claims

1. A mouldable polymer concrete composition which comprises the following components:-

a) an unsaturated, crosslinkable thermosetting resin;

b) an ethylenically unsaturated monomer;

c) as additive a reinforcing agent and/or a filler;

d) a low temperature free radical initiator;

e) a low temperature promoter; and

f) a styrene-diene block copolymer.

2. A composition as claimed in claim 1 in which the block copolymer is a styrene-butadiene block copolymer.

3. A composition as claimed in claim 1 or 2 in which said thermosetting resin is a polyester resin.

4. A composition as claimed in claim 1 or 2 in which said thermosetting resin is an epoxy resin.

5. A composition as claimed in claim 1 or 2 in which said thermosetting resin is an acetylene terminated polyamide.

6. A composition as claimed in claim 1 or 2 in which said thermosetting resin is a polyimide.

7. A composition as claimed in claim 1 or 2 in which said thermosetting resin is a polyamide-imide.

8. A composition as claimed in claim 3 in which said polyester resin has been prepared by reacting an unsaturated dicarboxylic acid and a polyol.

9. A composition as claimed in any one of the preceding claims in which said unsaturated monomer is styrene.

10. A composition as claimed in any one of the preceding claims in which said additive is gravel.

11. A composition as claimed in any one of the preceding claims in which said additive is a mixture of sand and gravel.

12. A composition as claimed in any one of the preceding claims in which the additive is present in an amount in the range of from 40% to 96% by weight, calculated on total composition.

13. A composition as claimed in claim 12 in which the additive is present in an amount in the range of from 60% to 90% by weight.

14. A composition as claimed in any one of the preceding claims in which said initiator is an organic peroxide.

15. A composition as claimed in claim 14 in which the initiator is methyl ethyl ketone peroxide.

16. A composition as claimed in any one of the preceding claims in which the promoter is cobalt naphthenate.

17. A composition as claimed in any one of the preceding claims in which the initiator/promoter combination cures at a temperature in the range of from 0 to 100 °C.

18. A composition as claimed in claim 17 in which the initiator/promoter combination cures at a temperature in the range of from 10 to 60 °C.

19. A composition as claimed in claim 18 in which the initiator/promoter combination cures at a temperature in the range of from 15 to 40 °C.

20. A composition as claimed in any one of the preceding claims in which each styrene block in said block copolymer has a weight average molecular weight in the range of from 1,000 to 10,000 and each butadiene block in said block copolymer has a weight average molecular weight in the range of from 30,000 to 100,000.

21. A composition as claimed in any one of the preceding claims in which the block copolymer is a tapered styrene/butadiene block copolymer.

22. A process for the manufacture of a mouldable polymer concrete composition as claimed in any one of the preceding claims which process comprises mixing:-

a) an unsaturated, crosslinkable thermosetting resin;

b) an ethylenically unsaturated monomer;

c) as additive a reinforcing agent and/or a filler;

d) a low temperature free radical initiator;

e) a low temperature promoter; and

f) a styrene-diene block copolymer, and moulding said mixture and allowing the moulded mixture to cure.